# EUROPEAN PATENT APPLICATION

(11) **EP 1 731 018 A1**
(43) Date of publication of application: **13.12.2006**
(21) Application number: 06114388.9
(22) Date of filing: 23.05.2006
(51) Int. Cl.: A01D 43/063

(54) **Mowing machine**

(30) Priority: 08.06.2005 US 147484
(71) Applicant: Deere & Company, Moline, IL 61265-8098 (US)
(72) Inventor: Benway, Randy, Horicon, WI 53032 (US)
(74) Representative: Löser, Iris

(57) **Abstract**

A pressure activated switch senses if air pressure in a grass clippings collection system between a mower deck (13) and a collection container (14) exceeds a specified pressure, and deactivate a power take off to the mower blades if the air pressure exceeds the specified pressure. Additionally, a warning indicator (36) connected to the pressure activated switch indicates if the air pressure exceeds the specified pressure.

## Description

This invention relates generally to fill indicators for containers used to collect grass clippings, and more specifically to collection container fill indicators that shut off the cutting blades when the container is full.

Grass mowing machines may include devices that indicate and visually display the full condition of a grass collection container. A common device for determining if a collection container is full is a micro switch. As the container fills, grass clippings build up and eventually contacts a micro switch. The switch may trigger an audible tone or light, or both, to alert the operator. For example, U.S. Patent No. 5,388,394 relates to a device that informs the operator when the bag is full.

However, such fill indicators may be inconsistent, and there is a risk that the container may become overfilled and the collection system may become plugged. The micro switch may become clogged with grass and stop functioning. The switch may not be activated by light material, such as dry leaves, that does not push hard enough on the switch. Other systems that measure air flow or use electric eyes or windows to determine fullness of a collection container may be unreliable or cost prohibitive.

U.S. Patent No. 6,622,465 relates to an apparatus and method for a material collection fill indicator that uses a pressure gauge and an auxiliary blower fan to propel clippings through a discharge chute. The pressure gauge senses air pressure in the discharge chute and provides a visible indicator of the level of air pressure. The pressure level in the discharge chute increases as the grass clipping collection container becomes increasingly full. Once the screens in the collection container are covered, static pressure increases rapidly, and the gauge indicates that pressure exceeds a specified value.

Although the fill indicator of U.S. Patent No. 6,622,465 provides a reliable, useful and economic device to warn an operator before the grass collection container becomes overfilled, there remains a concern that an operator will continue mowing after filling the container. For example, the operator may not see or hear the fill warning, or may continue mowing for a short time and overfill the collection container. If the operator keeps mowing after the container is full, the grass discharge chute and mower deck may get clogged with clippings. The unit then must be cleaned out by disassembling the chute and removing grass clippings by hand. Additionally, grass clippings may accumulate under the mower deck, resulting in poor cut quality.

WO-A1-9705765 shows a lawn mower comprising an indicator showing the level of the cuttings in the collector which is combined with a switch which, when the collector is full, produces an output signal which stops the engine or triggers an aural or visual warning signal. The switch has a switch element which operates an electrical contact, the switch element being designed as a flap mounted in the lid of the collector so that it can pivot over an aperture through which the stream of air carrying the cuttings passes.

An apparatus is needed that will prevent continued mowing after the grass collection container is full. An apparatus is needed that will not allow the discharge chute and mower deck to become clogged with clippings. An apparatus is needed that will not allow the container to become overfilled.

The object to be met with the invention is to comply with one or all of the needs mentioned.

This object is met according to the invention by the teaching of claim 1, while features developing the solution in an advantageous manner are set forth in the further claims.

A collection container fill indicator is connected electrically to a PTO shutoff to prevent continued mowing after the container is full. The fill indicator may be a pressure sensor having a tube that senses air pressure in the mower collection system which may extend between the discharge opening of a mower deck and a grass collection container. The collection system may include a blower housing, discharge chute, and collection container. A circuit shuts off the PTO and cutting blades when the pressure exceeds a specified value, indicating the collection container is full. The present invention prevents an operator from mowing after the container is full, and prevents continued mowing unless the container is emptied. The present invention provides an effective apparatus for assuring that the discharge chute and mower deck will not get clogged with clippings. Cut quality may be improved because grass clippings cannot accumulate after the discharge chute is full.

An embodiment of the invention described below is shown in the drawings, in which:
- Fig. 1: is a side view of a lawn and garden tractor having a grass collection container fill indicator and PTO shut-off according to a first embodiment of the invention.
- Fig. 2: is a perspective view of the grass collection container fill indicator and PTO shut-off of the first embodiment.
- Fig. 3: is an electrical schematic of the grass collection container fill indicator and PTO shutoff of the first embodiment.

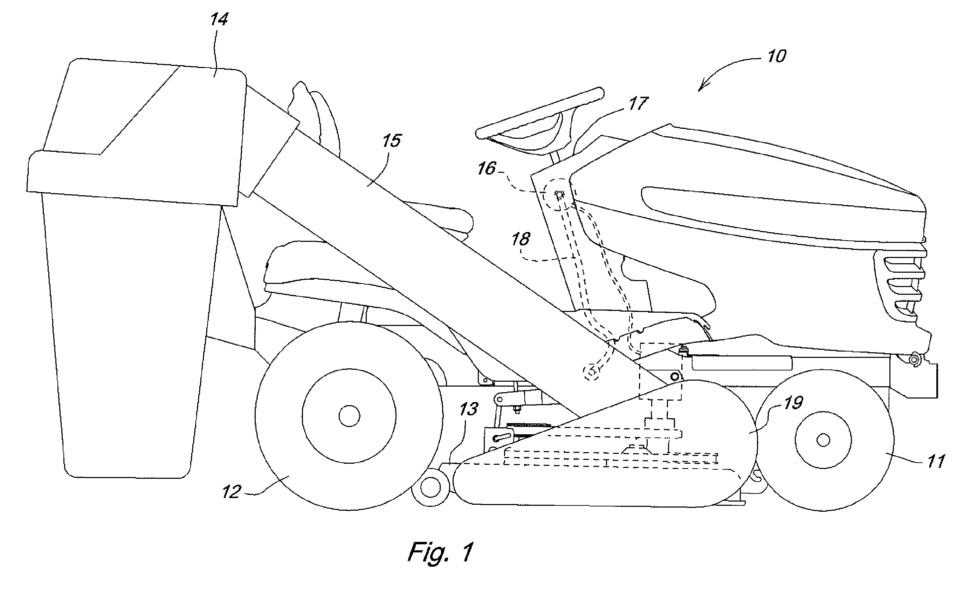

In one embodiment shown in Fig. 1, lawn and garden tractor or mowing machine 10 may have front wheels 11, rear wheels 12, mower deck 13 suspended from the vehicle frame between the front and rear wheels, and grass collection container 14 mounted at the rear of the vehicle. At least one surface, or a portion of one or more surfaces, of collection container 14 may be an air permeable material, such as a mesh or screen. Mower deck 13 may cover one or more cutting blades to cut and propel grass clippings into a grass clippings collection system. The grass clippings collection system may include discharge duct 15 extending rearwardly between an opening in mower deck 13 and grass collection container 14. Additionally, the collection system may include an auxiliary blower or fan 19 which may be mounted in a housing adjacent discharge duct 15 to help propel grass clippings through the duct into grass collection container 14.

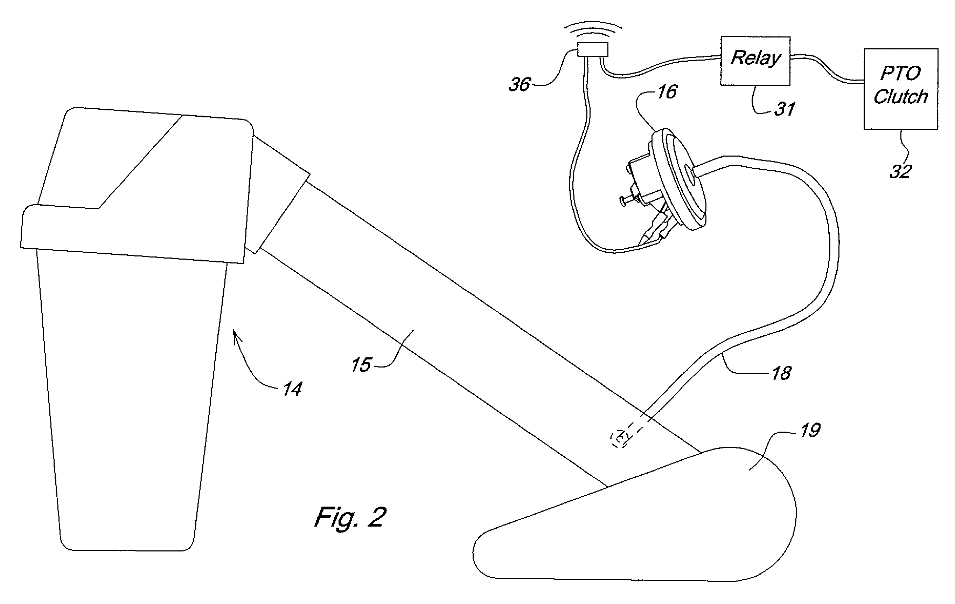

In one embodiment, as shown in Figs. 1 and 2, fill indicator 16 may be a pressure sensor that is connected to the collection system by air line or tube 18. For example, the air line or tube may be connected to the interior of discharge duct 15, the interior of the auxiliary blower housing, or the interior of the grass collection container. The air line or tube 18 may be a flexible plastic material having an inner diameter of about 0,3175 cm (1/8 inch). The air line or tube may communicate with interior of the collection system and sense the static air pressure within the system. The pressure sensor may be mounted in or near the dash or control panel 17.

In one embodiment, fill indicator 16 may be of the type that provides an electrical signal sufficient to activate relay 31 to shut off power take off (PTO) clutch 32 and stop rotation of one or more cutting blades. If fill indicator 16 detects a container full condition, which corresponds to a preset value, rotation of the cutting blades may be stopped.

In one embodiment, in which fill indicator 16 is a pressure sensor, a small piston or diaphragm may be positioned inside the housing of the pressure sensor. Air pressure in air line or tube 18 pushes against the piston or diaphragm. When the piston or diaphragm is moved far enough, it closes an electrical contact. This set point, where the contact is closed, may be adjustable, but is preferred to be at about 8,89 cm (3 ½ inches) of water column pressure. Optionally, fill indicator 16 may include an adjustment mechanism so that it may close the contact when the level of the collection container is higher or lower.

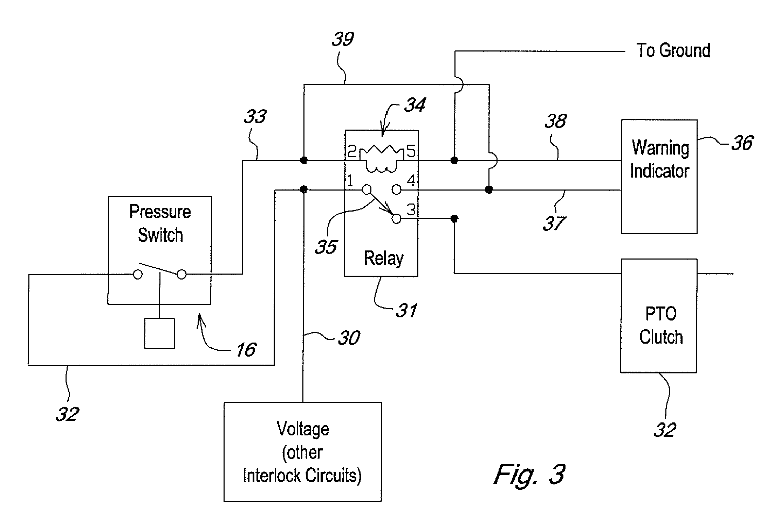

In one embodiment, as shown in Fig. 3, fill indicator 16 may be a pressure switch that is in an open position unless collection container 14 is filled. Pressure switch 16 may be connected through line 30 to a power source providing a voltage. For example, the voltage may be via other interlock circuits such as an operator presence detecting circuit that also may shut off the PTO to stop cutting blade rotation under certain conditions. If pressure switch 16 is open, line 30 may be connected by contact 35 biased to a position connecting pin 1 to pin 3, which may be then connected to PTO clutch 32. In this condition, the PTO clutch may allow the cutting blades to continue to rotate.

In one embodiment, the fill indicator may be a pressure switch that closes a circuit if air pressure in the collection system reaches a specified value indicating that grass collection container 14 is full. When the fill indicator or pressure switch closes, the circuit between lines 32 and 33 is closed. Coil 34 may cause contact 35 to move between pin 1 and pin 4, while feedback loop 39 connects pin 2 to pin 4. Feedback loop 39 may cause the relay to latch and remain active until power is removed, preventing the power take off (PTO) and cutting blades from being reactivated until the relay is reset and unlatched by removing power.

In one embodiment, warning indicator 36 also may be electrically connected to the circuit and may be activated when pressure switch 16 is closed due to a full collection container. The warning indicator may be a light or an alarm, either of which may be connected through lines 37 and 38 to relay 31.

In one embodiment, activation of relay 31 may disconnect PTO clutch 32. If power is removed from coil 34, contact 35 reconnects pin 1 to pin 3, and the relay may return to its unpowered state. The PTO clutch may remain in this state until power is removed and another PTO clutch command is received.

Having described the preferred embodiment, it will become apparent that various modifications can be made without departing from the scope of the invention as defined in the accompanying claims.

## Claims

1. A mowing machine (10) comprising a power source, a mower deck (13) and a grass clippings collection system connected to the mower deck (13) and comprising a fill indicator (16), **characterized in that** the fill indicator (16) comprises an air pressure sensor; a switch connected to the pressure sensor to shut off the power source or rotation of at least one mower blade respectively when the air pressure sensor indicates air pressure at or above a preset value.

2. The mowing machine according to claim 1, **characterized in that** the collection system includes a blower (19) mounted in a housing preferably located between the mower deck (13) and a collection container (14).

3. The mowing machine according to claim 1 or 2, **characterized by** a warning indicator (36), preferably an indicator light or an alarm, connected to the pressure sensor preferably providing a warning if the air pressure exceeds the specified pressure.

4. The mowing machine according to one or several of the previous claims, **characterized in that** the switch comprises a relay (31).

5. The mowing machine according to one or several of the previous claims, **characterized in that** the switch is connected to a power take off preferably a power take off clutch connected to the at least one mower blade.

6. The mowing machine according to one or several of the previous claims, **characterized by** a tube (18) connected to the air pressure sensor and entering the grass clippings collection system.

7. The mowing machine according to one or several of the previous claims 4 to 6, **characterized in that** the relay (31) is provided to selectively deactivate the power take off.

8. The mowing machine according to claim 7, **characterized in that** the relay (31) deactivates the power take off until the power source is removed.

9. The mowing machine according to one or several of the previous claims, **characterized in that** the power source is connected to at least one other interlock circuit.
